# EUROPEAN PATENT APPLICATION

(11) **EP 4 648 184 A1**
(43) Date of publication of application: **12.11.2025**
(21) Application number: 24175254.2
(22) Date of filing: 10.05.2024
(51) Int. Cl.: H01M 50/107, H01M 50/559, H01M 50/567

(54) **BATTERY CELL FOR A VEHICLE**

(71) Applicant: Volvo Car Corporation, 405 31 Göteborg (SE)
(72) Inventor: KARLSSON, Daniel, 40531 Göteborg (SE); WALLBORG, Martin Hjälm, 40531 Göteborg (SE); PERSSON, Klas, 40531 Göteborg (SE)
(74) Representative: Maiwald GmbH

(57) **Abstract**

The disclosure relates to a battery cell (10) comprising a housing (20) having an inner wall (21), a first battery terminal (30) and a second battery terminal (40), the battery cell (10) further comprising an electrode assembly (11) with a first electrode (13) having a first current collector (14) being electrically connected to the first terminal (30) and a second electrode (15) having a second current collector (16) being electrically connected to the second terminal (40), the second current collector (16) being configured with a variable height along an extension axis (h) of the housing (20), the variable height varying based on a temperature of the electrode assembly (11), and the second current collector (16) being able to slide along the extension axis (h) the relative to the housing (20).

## Description

### TECHNICAL FIELD

The present disclosure relates to a battery cell and a vehicle comprising a battery unit having multiple battery cells.

### BACKGROUND ART

Battery cells are a key component in battery electric vehicles (BEVs), storing energy and providing vehicle traction via electrical machines. As such, battery cells greatly influence the vehicle performance, efficiency, and manufacturing cost. Besides providing vehicle traction, battery cells are integrated to be a vehicle structural element, contributing with net positive stiffness and strength to the vegicle. Being structurally integrated, battery cells experience thermal and mechanical loads during its life span. Hence, it is important to design and develop battery cells with all the previous considerations in mind, to deliver and improve on performance attributes while reducing manufacturing cost and complexity.

Battery cell production is a process involving multiple steps and require significant investment in production equipment to meet quality, yield, and cost targets. Many of the battery cell internal components are welded to form a functional cell. Welding is a conventional and proven assembly method but also time and resources intensive, e.g., the process has to be dialed-in with trials to reach desired quality, regular quality controls are required to ensure specification is met and running maintenance to correct and adjust.

As a result, there is a growing need for alternative battery cell designs and assembly methods to simplify the manufacturing process while improving performance.

### SUMMARY

The above problems or needs are at least partially solved or alleviated by the subject matter of the independent claims of the present disclosure, wherein further examples are incorporated in the dependent claims.

According to a first aspect, there is provided a battery cell comprising a housing having an inner wall, a first battery terminal, and a second battery terminal, the battery cell further comprises an electrode assembly with a first electrode having a first current collector being electrically connected to the first terminal and a second electrode having a second current collector being electrically connected to the second terminal, the second current collector being configured with a variable height along an extension axis of the housing, the variable height varying based on a thermal load of the electrode assembly, and the second current collector being able to slide along the extension axis the relative to the housing.

Several battery cells that may be electrically connected with each other may form a battery unit. Several battery cells or battery units may form the battery. The battery cell comprises a housing. For example, the housing may be an outer casing or container, e.g., a can that may enclose internal components of the battery cell, providing structural support and protection. The inner wall may refer to an inner surface of the housing. The inner wall of the housing may also be an additional inner wall provided within the housing for example. The battery cell further comprises an electrode assembly. The electrode assembly comprises a first electrode and a second electrode. The electrodes may comprise materials like lithium, graphite, or metal oxides, or similar. The first electrode may be a different electrode than the second electrode. One electrode may be a negative electrode, another electrode may be a positive electrode. The battery cell further comprises a first current collector and a second current collector. These may comprise one or more conductive materials. The first current collector and the second current collector may be configured for collecting and distributing electrical current generated during charge and discharge cycles. The battery cell further comprises a first battery terminal and a second battery terminal, which provide for electrically connecting the battery cell to another battery cell, e.g., in series or in parallel. The electrode assembly may further comprise an electrolyte. The electrolyte may facilitate the movement of ions between the electrodes during charge and discharge cycles, enabling the flow of electrical current. Further, a separator may be provided between the first and second electrodes, preventing direct contact and short circuit, while allowing ions to pass through during operation. The electrode material and the separator may be part of the electrode assembly inside the housing, which may be of a jelly roll type, for example.

The second current collector may be able to slide relative to the inner wall of the housing along the extension axis. Able to slide may mean that the second current collector may be fitted in the housing in a sliding or gliding manner. In particular, contact portions of the second current collector with the inner wall of the housing may be in slidable connection to the housing. The second current collector may have a spring-like form or similar which allows for altering its configuration. For example, the second current collector may configured with a variable height along an extension axis of the housing or in other words may be configured to contract or extract when it may be exposed to a force for example. Such a force may be due to an expansion or retraction of the electrode assembly for example. For example, the variable height may vary based on a thermal load of the electrode assembly or other internal loads generated by processes inside the electrode assembly. Therefore, the second current collector may facilitate an extraction or contraction movement of the electrode assembly for example. By allowing the electrode assembly to expand or contract, the battery cell may better respond to changes in thermal loads, pressure, or other environmental factors for example. This may improve the performance and overall lifetime of the battery cell by allowing it to dynamically adapt to different operating conditions. Additionally, the second current collector may allow to absorb forces caused by shocks, vibrations, or similar.

The second current collector may be held in position by a force exerted by surrounding parts for example. During a manufacturing process of the battery cell, the electrode assembly comprising the first current collector and the second current collector may be fitted into the housing of the battery cell. A bottom portion of the housing may be hemmed in such that the second current collector may move upwards in a vertical direction or along an extension axis of the housing creating a force, ensuring contact between the first current collector and the first terminal and between the second current collector and the second terminal, for example. The force exerted by the surrounding parts may be a compressive force for example. This may mean for example, that the second current collector may be held in position or clamped between the second electrode and the second terminal. No other fixing, be it mechanical such as welding or hemming of the second current collector with the housing may be necessary. In addition, because there may always be a force acting on the second current collector, it may be ensured that the second current collector may always be in electrical connection with the housing of the battery and the second terminal during variation in height for example. This may mean that the second current collector may be under tension or exerting a compressive force for example. To summarize, the second current collector may be connected by fitting the second current collector into the housing. Additionally, the second current collector may be able to slide freely along the main vertical axis. This way, the need for welding or hemming processes may be eliminated, which may reduce manufacturing costs and simplify the assembly process. The second current collector may further ensure electrical contact with the housing, creating a conductive connection. The second current collector may further allow the electrode assembly to move freely in a vertical direction, or extract and contract, thus creating a damping effect and improving durability and overall lifetime for example.

In an example, the second current collector may comprise a rim portion force-fitted to an inner portion of the inner wall of the housing. A rim portion may refer to an outer part or edge of the second current collector that may come into direct contact with the inner wall of the housing and thus ensure electrical conductivity for example. Additionally, the rim portions may be in slidable contact with the inner wall of the housing. This may mean that the rim portions may be configured to glide or slide along the inner surface of the housing when a force is exerted in an extension axis of the housing. For example, this sliding contact may allow for flexibility and adaptability within the battery cell, such as expansion or contraction due to temperature variations, or other environmental factors. Force-fitted may mean a method of connection where components are joined together through friction or interference fit without the need for additional fasteners such as screws or adhesives or welding portions. For example, the second current collector may be fitted in the battery cell such that it is held in position due to the inner wall of the battery housing. Additionally, force-fitted may mean that the second current collector is additionally held in position by a compressive force. That compressive force as stated above may be exerted by clamping the second current collector between the second electrode and the second terminal for example. This way, the need for additional fasteners, welding, or hemming processes may be eliminated, which may reduce manufacturing costs and simplify the assembly process.

In an example, the rim portion may be able to slide on the inner portion of the inner wall. Able to slide may mean that the second current collector has a degree of mobility or adjustability relative to the inner portion of the inner wall along the extension axis of the housing for example. This degree of mobility may refer to all parts of the second current collector that may come into direct contact with the inner wall of the housing. For example, the rim portion may have a contact area with a side portion of the inner wall. Thus, when the second current collector expands or contracts, the rim portions slide along the side portion of the inner wall. When the second current collector moves along the inner wall, it may encounter frictional forces between its rim portion and the surface of the inner wall. These forces may oppose the mobility of the current collector and can vary depending on factors such as surface roughness and material properties, for example. Therefore, the second current collector may have a smooth surface that reduces friction. This way, a more efficient absorption of extraction and contraction forces of the battery assembly may be enabled.

In an example, the second current collector may comprise at least one spring element being electrically connected to the second terminal, wherein the at least one spring element may be configured as spring elements with variable height varying based on a temperature of the electrode assembly. The variable height may be further based on a temperature or other internal loads as thermal loads generated by processes inside the electrode assembly for example. The at least one spring element and the second current collector may be formed in one piece for example. The at least one spring element may comprise a bending portion to be able to bend or absorb a force for example. In particular, when the battery cell experiences thermal stress, it may expand and thus exert a force or compressive force on the second current collector. The at least one spring element may be slidable connected to the second terminal. The second current collector may be configured to absorb the force, as its bending portions may bend in response to the force. Additionally, as the at least one spring element may be in slidable contact to a bottom portion of the housing or the second terminal, the force or compressive force may be converted into a frictional force for example. In particular, the at least one spring element may convert the compressive force into a sliding or gliding movement for example.

Furthermore, the bending portion may be configured in such a way that it pushes the collector back into the initial position when the compressive force decreases for example. In other words, the second current collector may allow movements of the electrode arrangement to be damped. This may help to improve the durability and lifetime of the battery cell by reducing mechanical loads.

In an example, the at least one spring element may be arranged circumferentially at a rim portion of the second current collector. Circumferentially arranged may mean that the spring element may extend along the circumference or outer edge of the second current collector. By arranging the at least one spring element circumferentially at the rim portion of the second current collector, vertically acting forces may be absorbed very effectively for example. This may allow vertically acting forces to be distributed over a particularly wide surface area, which may increase the durability of the collector for example. At the same time, by arranging the at least one spring element circumferentially at the rim portion of the second current collector, the spring element may establish an electrical connection to the housing for example.

In an example, the at least one spring element may be substantially U- or C-shaped. U- or C-shaped may mean that the spring element may have a substantial U- or C-shape in a side view of the second current collector. A U- or C-shaped recess may have a curved profile resembling a partial circle or arc, with an open end and a closed end. The at least one spring element may comprise a bending portion that extends in a curved manner providing it with the U- or C-shape. The U- or C-shape of the at least one spring element may enable the second current collector to be variable in height along the extension axis of the housing. The bending portion or curved portion of the spring element may facilitate a distribution of forces, minimizing stress concentrations and promoting durability. It may be conceivable that the central portion comprises one or more recesses for example.

In an example, the second current collector may comprise two or more spring elements. The number of spring elements may vary depending on the specific requirements and constraints of the battery cell application. For example, there may be provided several spring elements circumferentially arranged at the rim portion of the second current collector. For example, there may be provided two, preferably six, and more preferably eight spring elements. More spring elements are conceivable depending on the specific requirements and constraints of the battery cell application. The more spring elements may be provided the more flexible the second current collector may be for example. This increased flexibility may allow the second current collector to better accommodate variations in temperature, pressure, and other environmental factors or loads to the electrical assembly for example. As a result, the battery cell may become more robust and capable of maintaining stable performance across a range of operating conditions. Additionally, the presence of more spring elements may contribute to distributing forces more evenly, reducing stress on individual components and potentially extending the overall lifespan of the battery cell. In other situations, it may be beneficial to reduce a number of spring elements. For example, if the battery cell design requires more rigidity or stability in certain conditions, fewer spring elements may be preferable, like two, for example. Additionally, fewer spring elements might simplify the manufacturing process and reduce production costs associated with component fabrication and assembly.

In an example, the second current collector may comprise at least two recesses arranged between the two or more spring elements. The recesses may be variable in number. For example, there may be provided two, preferably six, more preferably eight recesses. More recesses are conceivable. The at least two recesses may be circumferentially arranged at the rim portion of the second current collector. The more recesses may be provided the more flexible the second current collector may be for example. The size of the at least two recesses may vary depending on the specific design requirements and performance objectives of the battery cell. For example, larger recesses may allow for greater movement and flexibility of the collector, while smaller recesses may provide more stability and support. Larger or smaller may mean a diameter of the recesses and/or position. For example, the at least two recesses may be provided circumferentially at a rim portion of the second current collector and extend until a central portion of the second current collector. This may lead to more flexible spring elements for example. The at least two recesses may be provided circumferentially at a rim portion of the second current collector and extend until a bending portion of the spring element. This may lead to more rigid spring elements for example. Any other size or diameter or position of the recesses may be conceivable.

In an example, the at least two recesses are substantially C- or U-shaped. C- or U-shaped may mean that the spring element may have a substantial U- or C-shape in a top view of the second current collector. A C- or U-shaped recess may have a curved profile resembling a partial circle or arc, with an open end and a closed end. The recesses having the C- or U-shape may form the C- or U-shaped spring elements. The recesses may have other shapes, like rectangular, circular, elliptical or irregular for example. Thus it may be conceivable that the recesses have a complete closed profile for example.

In an example, an area of a central portion of the second current collector may be at least 50 % congruent to an area of a coupling surface of the second electrode. The second current collector may be electrically connected to the second electrode. The central portion of the second current collector may refer to a coupling portion to the second electrode for example. The congruence may ensure efficient electrical contact between the second current collector and the second electrode. Additionally, the congruence of at least 50 % may ensure a uniform or even transmission of a vertical force acting on the second current collector for example. The coupling surface of the second current collector may be substantially congruent to the coupling surface of the second electrode.

In an example, the first current collector may be substantially flat in height along the extension axis of the housing and over its extension in width, which may be perpendicular to the extension axis of the housing. By using the second current collector variable in height, the first current collector may have a constant height along the extension axis or a longitudinal extension of the housing and across its width extension or, in other words, the first current collector may be designed substantially flat in height. The substantially flat height of the first current collector may provide an increased battery cell volume that can be utilized for active material, for example. This additional space may be used for increasing the amount of active material as the electrolyte, for example. By increasing the amount of electrolyte, a battery cell's capacity may be improved. This may also improve the overall performance of the battery cell. In addition, it is possible to reduce the amount of material used within the battery cell and thus lower the costs and weight of the battery cell, for example. Further, the substantially flat profile of the first current collector may help to optimize an arrangement of components inside the battery cell for example. The first current collector may have a maximum height of 3 mm or less in its extension in height or along the longitudinal extension of the housing.

In an example, the first current collector may be laser welded or riveted to the first electrode and the second current collector may be clamped in between the electrode assembly and the second battery terminal. Laser welding may be used to establish precise connections between a current collector and an electrode. This may provide a low-resistance connection between a current collector and an electrode and thus ensure efficient electrical conductivity within the battery cell. However, laser welding may be labor-intensive and thus costly. The second current collector may be held in position by a force exerted by surrounding parts or in other words clamped for example. No other fixing, be it mechanical such as welding or hemming of the second current collector with the housing may be necessary. Thus, by clamping the second current collector sufficient mechanical stability may be provided, ensuring electrical connection without the need of labor-intensive methods like laser welding.

In an example, the housing may be cylindrically shaped and the housing may have an electrode assembly, the electrode assembly may be of a jelly roll type. In other words, the outer housing or casing surrounding the electrode assembly of the battery cell may have a cylindrical form. This may provide an efficient use of space, ease of manufacturing, and compatibility with various applications, such as cylindrical battery packs, for example. The electrode assembly may be of a jelly roll type. The jelly roll refers to an electrode material configuration in which electrode material and separator material are rolled together into a cylindrical shape. This rolling process may allow for efficient packaging of the electrode material and maximizing a surface area available for electrochemical reactions while maintaining a compact design.

In an example, the second current collector may be substantially disc-shaped. Substantially disc-shaped may mean that the second current collector may have a shape resembling a disc or a circular object having a U- or C-shaped rim portion as described before. The disc-shape may at the same time provide for the spring characteristic while ensuring an electrical connection to the housing.

According to a second aspect, there is provided a vehicle comprising a battery unit, the battery unit having multiple battery cells according to the first aspect of this disclosure. The vehicle may be of any type, such as a hybrid electric vehicle or a battery electric vehicle, for example. The battery unit may be of any type, such as a traction battery unit, or a high voltage battery, for example.

It is noted that the above aspects, examples and features may be combined with each other irrespective of the aspect involved.

The above and other aspects of the present disclosure will become apparent from and elucidated with reference to the examples described hereinafter.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### BRIEF DESCRIPTION OF DRAWINGS

Examples of the disclosure will be described in the following with reference to the following drawings.
- Figure 1: shows a perspective view of a battery cell according to this disclosure;
- Figure 2: shows another perspective view of a battery cell according to this disclosure;
- Figures 3A - 3B: show cross-sectional views of a battery cell according to this disclosure, the battery cell includes a second current collector variable in height;
- Figure 4: shows a second current collector according to this disclosure; and
- Figure 5: shows a schematic illustration of a vehicle comprising a battery unit with multiple battery cells according to this disclosure.

### DETAILED DESCRIPTION

The Figures are merely schematic representations and serve only to illustrate examples of the disclosure. Identical or equivalent elements are in principle provided with the same reference signs.

The designation of elements and steps as first, second, etc. as provided herein is merely intended to make the elements and steps referenceable and distinguishable from one another. By no means does the designation of elements and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of elements or steps in a certain order is merely intended to facilitate one example of this disclosure and by no means constitutes a limitation of the scope of this disclosure. Generally, unless no explicitly required order is being mentioned, the steps may be carried out in any feasible order.

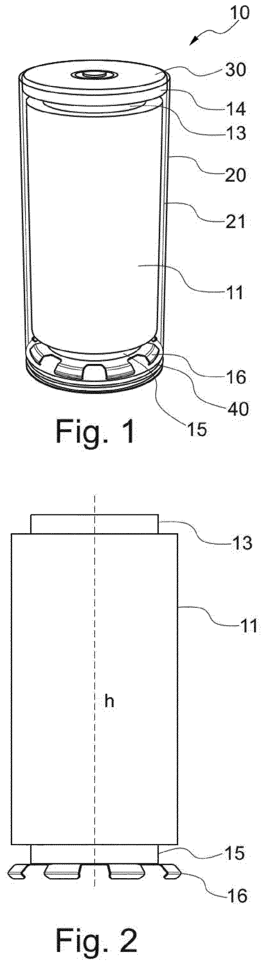

Figure 1 shows a battery cell according to this disclosure. The battery cell 10 comprises a housing 20, which is of a cylindrical type in this example. The housing 20 comprises an inner wall 21, a first battery terminal 30, and a second battery terminal 40 opposite the first battery terminal 30. The battery cell 10 further comprises an electrode assembly 11. The electrode assembly 11 comprises a first electrode 13 having a first current collector 14 which is electrically connected to the first battery terminal 30 and a second electrode 15 having a second current collector 16 which is electrically connected to the second battery terminal 40. The second current collector 16 has a disc-shape and is fitted into the housing 20 of the battery cell 10. The second current collector 16 is in electrical contact with the inner wall 21 of the housing. The second current collector 16 may be further held in position by a force exerted by surrounding parts or in other words may be clamped. In this example, the second current collector 16 is held in position or clamped between the second electrode 15 and the second terminal 40. Additionally, the second current collector 16 is held in position laterally by the inner wall 21 of the housing 20. No other fixing, be it mechanical such as welding or hemming of the second current collector with the housing 20 may be necessary.

Figure 2 shows a perspective view, in particular a side view, of a battery cell 10 according to this disclosure. The terminal ends 30, 40 and the housing 20 have been excluded for a simplified illustration. The battery cell 10 comprises an electrode assembly 11 with a first electrode 13 having a first current collector 14 and a second electrode 15 having a second current collector 16, the second current collector 16 being configured with a variable height along an extension axis h of the housing 20. In this example, the second current collector 16 comprises several spring elements 16d circumferentially arranged at a rim portion 16b of the second current collector 16, wherein the spring elements 16d have a substantially U- or C-shape. The U- or C-shape of the at least one spring element 16d may enable the second current collector 16 to be variable in height along the extension axis h of the housing 20.

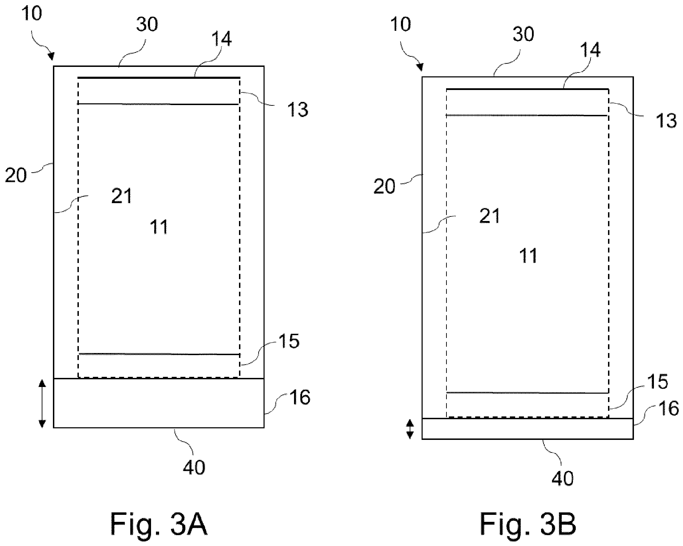

Figures 3A and 3B show the battery cell 10 of Fig. 2 including the second current collector 16 that is variable in height. Figure 3A illustrates a first exemplary scenario in which the second current collector 16 may allow for a dynamic adjustment of its height to accommodate changes in temperature within the battery cell 10. In this scenario, a temperature within the battery cell 10 is decreased due to, for example, outer climate conditions. This may be due to that a vehicle 1 comprising the battery cell 10 may be exposed to cold conditions, e.g., temperatures below 0 °C for example. Due to the exposure to cold conditions, the electrode assembly 11 may contract. This contraction exerts a force or a tension within the battery cell 10. Because the second current collector 16 in this example is variable in height, it may extend in longitudinal direction or in an extension axis h and thus compensate the contraction force. In another example, as shown in Fig. 3B, the battery cell 10 of the vehicle 1 may be exposed to increased temperatures, for example, due to exposure to hot climate conditions, e.g., temperatures above 30 °C or similar and/or due to high utilization conditions of the battery unit 2 or similar. In this scenario, the increased temperature of the battery cell 10 leads to an expansion of the electrode assembly 11, which exerts a force or a pressure within the battery cell 10. Because the second current collector 16 is variable in height in an extension axis h, it can be compressed and thus compensate the pressure within the battery cell 10. These examples of extending or compressing of the second current collector 16 in Figs. 3A and 3B are only for illustrative purposes. All intermediate positions of the second current collector 16 according to the climatic or operational conditions are possible. The second current collector 16 may be further at least partially designed as a spring for varying its height.

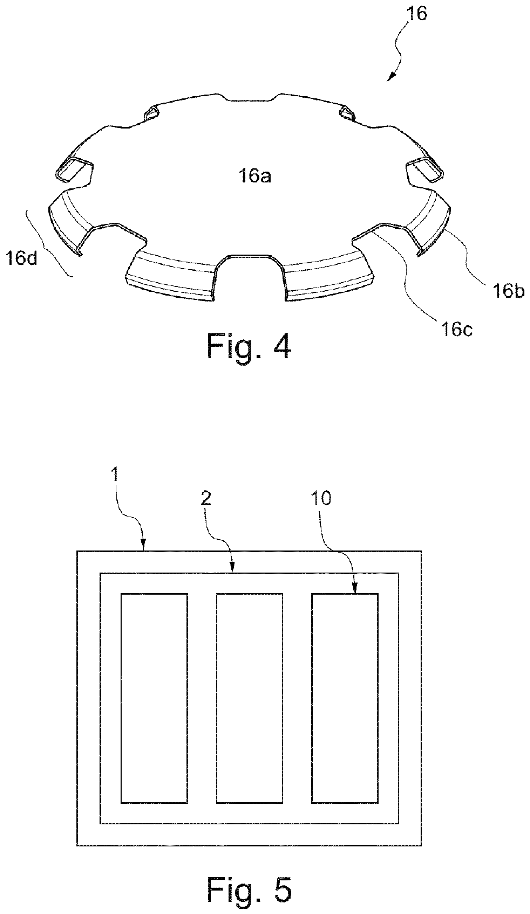

Figure 4 shows a second current collector 16 according to this disclosure. The second current collector 16 may comprise one or more conductive materials. In this example, the second current collector 16 may be of a copper type. Other materials are conceivable as aluminum, nickel, conductive polymers, or carbon-based materials, for example. A center of the second current collector 16 is formed by a central portion 16a. The central portion 16a may be a coupling portion to the second electrode 15 for example. The second current collector 16 comprises eight spring elements 16d that are arranged circumferentially at the center portion 16a. However, it may also be conceivable that the spring elements 16d may be arranged at a rim portion 16b of the second current collector 16. The second current collector 16 is formed in one piece. However, it may be conceivable that the current collector 16 may be composed of separate components, for example. It may also be possible, that different components are composed of different materials, for example. In this view, the spring elements 16d have a curved profile resembling a partial circle or arc, with an open end and a closed end or in other words have a substantially U- or C-shape. The second current collector 16 comprises eight recesses 16c circumferentially arranged at the central portion 16a of the second current collector 16. The recesses 16c may determine the shape of the spring elements 16d. For example, larger recesses 16c may result in larger spring elements 16d which may allow for greater movement and flexibility of the second current collector 16. Smaller recesses 16c may result in smaller spring elements 16b which may provide more stability and support to the second current collector 16. Larger or smaller may mean a diameter of the recesses 16c and/or position and/or form for example. The recesses 16c have a C- or U-shape and form the C- or U-shaped spring elements 16d in this example. The recesses 16c may have other shapes, like rectangular, circular, elliptical, or irregular for example. Thus it may be conceivable that the recesses 16c have a completely closed profile. It is also conceivable that the recesses 16c have a different shape than the spring elements 16d.

Figure 5 shows a vehicle 1 comprising the battery unit 2 having three battery cells 10 according to this disclosure.

### LIST OF REFERENCE SIGNS

- 1: vehicle
- 2: battery unit
- 10: battery cell
- 11: electrode assembly
- 13: first electrode
- 14: first current collector
- 15: second electrode
- 16: second current collector
- 16a: central portion
- 16b: rim portion
- 16c: recesses
- 16d: spring element
- 20: housing
- 21: inner wall
- 30: first battery terminal
- 40: second battery terminal
- h: extension axis

## Claims

1. A battery cell (10) comprising a housing (20) having an inner wall (21), a first battery terminal (30), and a second battery terminal (40), the battery cell (10) further comprising an electrode assembly (11) with a first electrode (13) having a first current collector (14) being electrically connected to the first terminal (30) and a second electrode (15) having a second current collector (16) being electrically connected to the second terminal (40), the second current collector (16) being configured with a variable height along an extension axis (h) of the housing (20), the variable height varying based on a thermal load of the electrode assembly (11), and the second current collector (16) being able to slide along the extension axis (h) relative to the housing (20).

2. The battery cell (10) according to claim 1, wherein the second current collector (16) comprises a rim portion (16b) force-fitted to an inner portion of the inner wall (21) of the housing (20).

3. The battery cell (10) according to claim 2, wherein the rim portion (16b) is able to slide on the inner portion of the inner wall (21).

4. The battery cell (10) according to any one of the previous claims, wherein the second current collector (16) comprises at least one spring element (16d) being electrically connected to the second terminal (40), wherein the at least one spring element (16d) is configured as spring elements (16d) with variable height varying based on a temperature of the electrode assembly (11).

5. The battery cell (10) according to claim 4, wherein the at least one spring element (16d) is arranged circumferentially at a rim portion (16b) of the second current collector (16).

6. The battery cell (10) according to claim 4 or 5, wherein the at least one spring element (16d) is substantially U- or C-shaped along the extension axis of the housing (20).

7. The battery cell (10) according to any one of claims 4 to 6, wherein the second current collector (16) comprises two or more spring elements (16d).

8. The battery cell (10) according to claim 7, wherein the second current collector (16) comprises at least two recesses (16c) arranged between the two or more spring elements (16d).

9. The battery cell (10) according to claim 8, wherein the at least two recesses (16c) are substantially C- or U-shaped.

10. The battery cell (10) according to any of the previous claims, wherein an area of a central portion (16a) of the second current collector (16) is at least 50 % congruent to an area of a coupling surface of the second electrode (15).

11. The battery cell (10) according to any of the previous claims, wherein the first current collector (14) is substantially flat in height along the longitudinal extension of the housing (20) and over its extension in width, which is perpendicular to the longitudinal extension of the housing (20).

12. The battery cell (10) according to any of the previous claims, wherein the first current collector (14) is laser welded or riveted to the first electrode (13) and the second current collector (16) is clamped in between the electrode assembly (11) and the second battery terminal (40).

13. The battery cell (10) according to any of the previous claims, the housing (20) being cylindrically shaped and the housing (20) having an electrode assembly (11), the electrode assembly (11) being of a jelly roll type.

14. The battery cell (10) according to claim 13, wherein the second current collector (16) is substantially disc-shaped.

15. A vehicle (1) comprising a battery unit (2), the battery unit (2) having multiple battery cells (10) according to any of the previous claims.
